# EUROPÄISCHE PATENTSCHRIFT

(11) **EP 0 861 701 B1**
(45) Veröffentlichungstag und Bekanntmachung des Hinweises auf die Patenterteilung: **02.08.2000**
(21) Anmeldenummer: 97122272.4
(22) Anmeldetag: 17.12.1997
(51) Int. Cl.: B23D 27/04, B23Q 11/00

(54) **Knabber**
Nibbler
Grignoteuse

(30) Priorität: 28.02.1997 DE 19708177
(43) Veröffentlichungstag der Anmeldung: 02.09.1998
(73) Patentinhaber: C. & E. FEIN GmbH & Co., D-70176 Stuttgart (DE)
(72) Erfinder: Lehmann, Bernhard, 73579 Schechingen (DE); Vogel, Michael, 71332 Waiblingen (DE)
(74) Vertreter: Gahlert, Stefan, Dr.-Ing.

(56) Entgegenhaltungen:
- WO-A-93/25352
- DE-A- 3 737 940
- GB-A- 635 227

## Beschreibung

Die Erfindung betrifft einen Knabber mit einem Stößeltrieb, mit einem in einem Gehäuse aufgenommenen, längs einer Stößelachse hin- und herbewegbaren Stößel, durch den ein Stempel antreibbar ist, der mit einer am Gehäuse befestigten Matrize zusammenwirkt, mit einer motorisch antreibbaren Exzenterwelle zum Antrieb des Stößels und mit einem Ausgleichsgewicht zur Vibrationsdämpfung.

Ein derartiger Knabber ist aus der DE-A-1 552 631 bekannt.

Der bekannte Knabber umfaßt eine Kurbelwelle oder Exzenterwelle, über die der Stößel mittels einer Pleuelstange angetrieben wird. Um eine Unwucht der Kurbel- oder Exzenterwelle zu vermeiden, ist ein Ausgleichsgewicht auf der dem Exzenter entgegengesetzten Seite an der Kurbelwelle vorgesehen.

Derartige Knabber sind seit Jahrzehnten gebräuchlich, um Bleche und dgl. zu schneiden. Insbesondere, wenn stärkere Bleche bearbeitet werden müssen, ergeben sich durch die schlagende Bewegung des Stempels starke Vibrationen, die für den Benutzer des Gerätes unangenehm sind und schon nach kurzer Arbeitszeit zu Ermüdungserscheinungen führen. Darüber hinaus ist es infolge der hin- und hergehenden Bewegung des Stößeltriebs bei größeren Knabbern teilweise schwierig, diese bei laufendem Antrieb an eine Blechkante anzusetzen.

Aus der WO-A-93 25 352 ist es grundsätzlich bekannt, eine Werkzeugmaschine mit hin- und hergehendem Antrieb mit einem Hilfsgewicht zu versehen, das von einer Kurbelwelle in entgegengesetzter Richtung wie das hin- und herbewegte Werkzeug angetrieben wird.

Durch einen solchen Aufbau lassen sich grundsätzlich die beim Betrieb auftretenden Vibrationen bei einer solchen Werkzeugmaschine reduzieren. Allerdings sind dieser Druckschrift lediglich allgemeine Hinweise entnehmbar, so daß die speziellen Probleme, die beim Aufbau eines Knabbers auftreten, hiermit nicht gelöst werden können.

Ein Knabber erfordert nämlich einen äußerst kompakten Aufbau wegen des häufigen Einsatzes an schwer zugänglichen Stellen.

Die GB-A-635 227 offenbart ein weiteres System ähnlicher Bauart zur Vibrationsdämpfung bei einer Stichsäge.

Jedoch ist der beschriebene Dämpfungsmechanismus mit einem Zusatzgewicht, das über ein Zahnrad angetrieben wird, im praktischen Gebrauch einerseits wegen der erhöhten Geräuschentwicklung infolge des Zahnradantriebes und andererseits wegen der durch das Zusatzgewicht erheblich vergrößerten Baugröße nicht auf einen Knabber übertragbar.

Der Erfindung liegt somit die Aufgabe zugrunde, einen verbesserten Knabber mit verminderter Vibration und möglichst kompaktem Aufbau zu schaffen.

Diese Aufgabe wird durch einen Knabber mit einem Stößelantrieb, mit einem in einem Gehäuse aufgenommenen, längs einer Stößelachse hin- und herbewegbaren Stößel gelöst, durch den ein Stempel antreibbar ist, der mit einer am Gehäuse befestigten Matrize zusammenwirkt, mit einer motorisch antreibbaren Exzenterwelle zum Antrieb des Stößels und mit einem Ausgleichsgewicht zur Vibrationsdämpfung, wobei das Ausgleichsgewicht im Gehäuse in einer Richtung parallel zur Stößelachse geführt ist und von der Exzenterwelle entgegen der Bewegung des Stößels hin- und hergehend angetrieben ist, wobei auf der Exzenterwelle ein Ausgleichsexzenter vorgesehen ist, der gegenüber einem Antriebsexzenter zum Antrieb des Stößels drehversetzt angeordnet ist, und wobei das Ausgleichsgewicht eine Führungsöffnung aufweist, die von dem Ausgleichsexzenter zum Antrieb des Ausgleichsgewichts durchsetzt ist.

Die Aufgabe der Erfindung wird auf diese Weise vollkommen gelöst.

Mit dem erfindungsgemäßen Knabber ergibt sich eine stark verringerte Vibration sowohl im Leerlauf als auch im Schneidbetrieb, was sich sowohl vorteilhaft auf die Lebensdauer des Gerätes auswirkt, als auch ein erheblich ermüdungsfreieres Arbeiten für den Anwender ermöglicht. Darüber hinaus wird es durch die stark verminderten Vibrationen erheblich erleichtert, den Knabber bei laufendem Antrieb an die Kante eines zu schneidenden Materials anzusetzen.

Erfindungsgemäß wird eine hin- und hergehende Ausgleichsbewegung eines Ausgleichsgewichts verwendet, das im Gehäuse in einer Richtung parallel zur Stößelachse geführt ist und über die Exzenterwelle angetrieben wird, um so einen vollständigen Vibrationsausgleich im Leerlauf des Gerätes zu erreichen. Dabei wird ein äußerst kompakter Aufbau dadurch erreicht, daß das Ausgleichsgewicht unmittelbar von einem Ausgleichsexzenter auf der Exzenterwelle angetrieben wird, die in eine Führungsöffnung des Ausgleichsgewichtes eingreift.

Das Ausgleichsgewicht weist vorzugsweise eine ovale Führungsöffnung auf, in die der Ausgleichsexzenter gleitend eingreift.

Auf diese Weise läßt sich ein besonders einfacher und kostengünstiger Antrieb des Ausgleichsgewichtes durch die Exzenterwelle realisieren.

In zusätzlicher Weiterbildung dieser Ausführung ist das Ausgleichsgewicht mit seitlichen Stegen, die in Nuten eingreifen, am Gehäuse geführt.

In weiter vorteilhafter Ausgestaltung dieser Ausführung sind die seitlichen Stege in Kunststoffnuten am Gehäuse geführt.

Durch diese Maßnahmen läßt sich eine besonders einfache und kostengünstige Führung des Ausgleichsgewichtes am Gehäuse erreichen. Durch die Ausführung der Führungsnuten als Kunststoffnuten wird ein gewisses Spiel in der Führung ermöglicht, so daß Fertigungstoleranzen aufgefangen werden und ein Verklemmen des Ausgleichsgewichtes in den Führungsnuten auf jeden Fall vermieden wird.

Sollten die Kunststoffnuten nach längerem Betrieb einmal abgenutzt sein, was sich ggf. durch eine erhöhte Geräuschsentwicklung äußert, so können diese einfach ausgetauscht werden.

Da das Ausgleichsgewicht vorzugsweise aus Metall besteht, etwa als Gußteil hergestellt ist, ergibt sich eine günstige Gleitpaarung mit den Kunststoffnuten.

In zusätzlicher Weiterbildung der Erfindung ist der Hub des Ausgleichsgewichtes geringer als der Hub des Stößeltriebs, wobei die Masse des Ausgleichsgewichtes jedoch derart bemessen ist, daß der Impuls des Ausgleichsgewichtes gleich groß, aber entgegengesetzt wie der Impuls des Stößeltriebs ist.

Auf diese Weise läßt sich auch bei eng begrenzten Platzverhältnissen ein vollständiger Vibrationsausgleich erreichen, wozu lediglich die Masse des Ausgleichsgewichtes bei einem verringerten Hub entsprechend vergrößert werden muß.

In zusätzlicher Weiterbildung der Erfindung ist der Antriebsexzenter über ein Lager mit einer Pleuelstange drehbeweglich verbunden, die in einer Ausnehmung des Stößels an ihrem dem Stempel zugewandten Ende drehbeweglich und an ihrem gegenüberliegenden Ende gleitend geführt ist.

Auf diese Weise läßt sich die Umsetzung der Exzenterbewegung in die hin- und hergehende Bewegung des Stößels auf besonders einfache und kostengünstige Weise erreichen.

Gemäß einer weiteren Ausgestaltung der Erfindung weist der Stößel an seinem dem Stempel zugewandten Ende ein zur Stößelachse außermittig angeordnetes Koppelelement zur formschlüssigen Kopplung mit dem Stempel auf, wobei der Stempel in einem Werkzeughalter beweglich geführt ist, der über eine Gewindeverbindung am Gehäuse lösbar befestigt ist, wobei die formschlüssige Kopplung des Stößels mit dem Stempel durch ein seitliches Einschieben des Stempels mit einem Formschlußelement in ein Formschlußgegenelement herstellbar ist.

Diese Maßnahme der Erfindung ist auch selbständig schutzfähig, unabhängig davon, ob ein Vibrationsausgleich des Knabbers mit dem hin- und hergehenden Ausgleichsgewicht vorgesehen ist oder nicht.

Durch diese Maßnahme wird eine besonders einfache Befestigung des Stempels am Stößel erreicht, um ein schnelles Austauschen des Werkzeuges mit Matrize und Stempel zu ermöglichen oder um ein Verlängerungselement zwischen dem Stößelantrieb und dem Werkzeug bestehend aus Stempel und Matrize einsetzen zu können. Die Verwendung einer derartigen Verlängerung ist insbesondere bei Arbeiten an schwer zugänglichen Stellen von Vorteil. Dies wird insbesondere bei Arbeiten an exponierten Stellen, wie etwa bei Dacharbeiten von Vorteil sein, bei denen der Benutzer möglichst wenig Werkzeuge mit sich führen will.

In vorteilhafter Weiterbildung dieser Ausführung ist am Gehäuse ein Außengewinde vorgesehen, an dem der Werkzeughalter mit einer Überwurfmutter zu befestigen ist.

Durch diese Maßnahme wird eine einfache Befestigung des Werkzeughalters am Gehäuse ermöglicht, ohne daß hierzu die Verwendung eines Werkzeuges notwendig ist.

In weiter vorteilhafter Ausgestaltung der Erfindung ist der Stößel zweiteilig mit einem ersten Stößelelement, an dem die Pleuelstange angreift, und mit einem zweiten Stößelelement, das mit dem Stempel oder dem Verlängerungselement verbindbar ist, ausgebildet.

Durch diese Maßnahme wird die Montage des Stößels vereinfacht und eine Verdrehbarkeit des Stempels in verschiedene Schneidrichtungen ermöglicht.

Insgesamt kann bei der lösbaren Befestigung des Stempels am Stößel der Knabber derart ausgebildet werden, daß die an der Maschine fest montierten Teile vollständig nach außen geschützt sind und nach Abnahme der Überwurfmutter ein schnelles Austauschen des Werkzeughalters bzw. ein Einsetzen des Verlängerungselementes ermöglicht ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: einen Teilschnitt eines erfindungsgemäßen Knabbers im Bereich des Getriebekopfes;
- Fig. 2: eine Aufsicht auf das Ausgleichsgewicht gemäß Fig. 1 von oben nebst den zugehörigen seitlichen Führungen am Gehäuse und
- Fig. 3: eine Teilansicht eines Verlängerungselementes zur Verlängerung des Werkzeughalters gemäß Fig. 1.

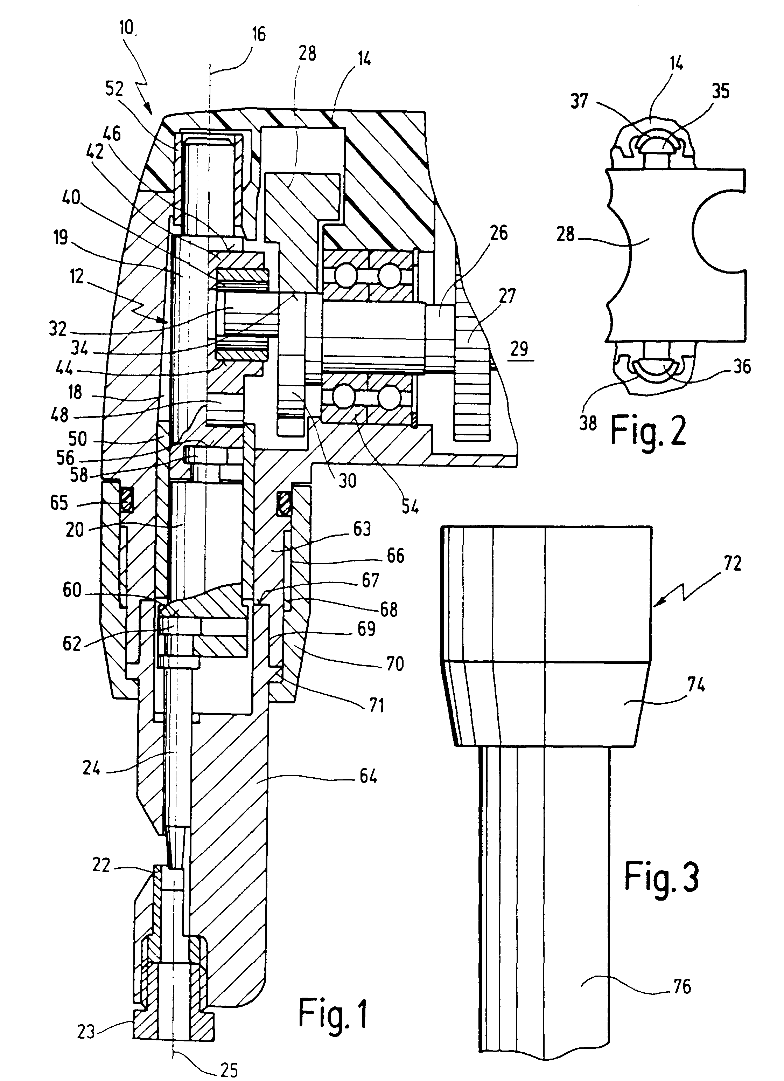

In Fig. 1 ist ein erfindungsgemäßer Knabber insgesamt mit der Ziffer 10 bezeichnet.

Der Knabber 10 umfaßt einen insgesamt mit der Ziffer 12 bezeichneten Stößeltrieb, der einen zweiteiligen, aus einem ersten Stößelelement 19 und einem zweiten Stößelelement 20 gebildeten Stößel 18 umfaßt, der entlang einer Stößelachse 16 in Längsrichtung hin- und hergehend antreibbar ist. Das zweite Stößelelement 20 ist mit einem Stempel 24 formschlüssig verbindbar, der in einem Werkzeughalter 64 geführt ist, an dem eine Matrize 22 vorgesehen ist, mit der der Stempel 24 zusammenwirkt, um durch seine hin- und hergehende Bewegung ein Blech oder dgl. auf stanzende Weise zu schneiden.

Zum Antrieb des Stößeltriebs 12 ist eine Exzenterwelle 26 vorgesehen, die in einem Doppelkugellager 54 am Gehäuse 14 gelagert ist und von einem mit der Ziffer 29 angedeuteten Motor über ein Getriebe angetrieben ist, von dem lediglich das letzte Zahnrad 27 angedeutet ist.

An der Exzenterwelle 26 ist am zum Stößeltrieb 12 weisenden Ende ein Antriebsexzenter 32 außermittig befestigt, über den eine Pleuelstange 42 angetrieben wird, um das erste Stößelelement 19 in eine hin- und hergehende Bewegung entlang der Stößelachse 16 zu versetzen. Hierzu ist der Antriebsexzenter 32 von einem Nadellager 40 aufgenommen, auf dem die Pleuelstange 42 befestigt ist. Die Pleuelstange 42 ist ihrerseits in einer Ausnehmung 44 des ersten Stößelelementes 19 derart aufgenommen, daß sie an ihrem unteren, dem Stempel 24 zugewandten Ende über eine Rolle 48 drehbeweglich gelagert ist und an ihrem oberen Ende über eine gewölbte Fläche 46 in der Ausnehmung 44 gleitend aufgenommen ist, so daß die durch die Exzenterbewegung seitlichen Bewegungskomponenten aufgenommen werden können.

Das erste Stößelelement 19 und das zweite Stößelelement 20 sind an ihrem oberen bzw. unteren Ende über je eine Führungsbuchse 52 bzw. 50 am Gehäuse 14 gleitend gelagert. Das zweite Stößelelement 20 ist mit dem ersten Stößelelement 19 über einen Bund 58 formschlüssig verbunden, der in eine entsprechend geformte Nut 56 am ersten Stößelelement 19 eingreift. Diese Verbindung ist zur Vereinfachung der Montage vorgesehen und erlaubt eine Verdrehbarkeit des Werkzeughalters 64 samt Stempel 24 in verschiedene Schneidrichtungen.

An seinem unteren Ende ist das zweite Stößelelement 20 gleichfalls über eine formschlüssige Verbindung mit dem Stempel 24 verbunden. Der Stempel 24 ist im Werkzeughalter 64 entlang einer Stempelachse 25 gleitend geführt, die in bezug auf die Stößelachse 16 außermittig angeordnet ist. Zur Verbindung zwischen Stempel 24 und zweitem Stößelelement 20 ist am äußeren Ende des zweiten Stößelelements 20 ein Formschlußelement 60 in Form einer Nut vorgesehen, in die ein Formschlußgegenelement 62 des Stempels 24 seitlich einschiebbar ist, das als Bund ausgebildet ist, um so nach einem Lösen des Werkzeughalters 64 eine leicht herstellbare bzw. lösbare formschlüssige Verbindung zwischen Stempel 24 und zweitem Stößelelement 20 zu ermöglichen.

Der Stempel 24 wirkt mit der Matrize 22 zusammen, die vom unteren Ende her in den Werkzeughalter 64 einsetzbar ist und durch Aufschrauben eines Matrizenhalters 23 von unten auswechselbar befestigt ist.

Um ein schnelles Wechseln des Werkzeughalters 64 mit Stempel 24 und Matrize 22 an dem Knabber 10 zu ermöglichen, ist das dem Werkzeughalter 64 zugewandte Ende des Gehäuses als etwa zylindrische Aufnahme 63 ausgebildet, die mit einem Außengewinde 66 versehen ist. Der Werkzeughalter 64 greift mit seinem dem Stößel 18 zugewandten Ende in eine zylindrische Ausnehmung 69 der Aufnahme 63 ein und liegt mit seiner Stirnfläche 67 am unteren Ende der Aufnahme 63 an. Zur Befestigung ist eine Überwurfmutter 70 vorgesehen, die mit einem Innengewinde 68 auf das Außengewinde 66 der Aufnahme 63 aufschraubbar ist und am Bund 71 angreift. Dabei wird durch einen O-Ring 65, der in die Aufnahme 63 eingelassen ist, ein Lösen der Überwurfmutter 70 bei Vibrationen verhindert. Soll der Werkzeugträger 64 gewechselt werden, so muß hierzu lediglich die Überwurfmutter 70 gelöst werden, sodann kann der Werkzeugträger 64 soweit aus der Ausnehmung 69 herausgezogen werden, daß das Formschlußelement 62, d.h. der Bund des Stempels 24, seitlich herausgezogen werden kann. Ein neuer Werkzeugträger oder ggf. ein anderer Stempel 24 kann nunmehr eingesetzt werden.

Darüber hinaus ist es möglich, das zweite Stößelelement 20 durch ein Verlängerungselement 72 gemäß Fig. 3 zu verlängern, um an schwer zugänglichen Stellen zu arbeiten, bei denen ein tiefes Eintauchen von Stempel und Matrize erforderlich ist. Hierzu wird auf der Aufnahme 63 ein Verlängerungsrohr 76 mit einer Überwurfmutter 74 in der zuvor beschriebenen Weise befestigt, wobei innerhalb des Verlängerungsrohrs 76 ein Verlängerungselement zur Verlängerung des zweiten Stößelelementes 20 vorgesehen ist, an dessen Ende sich wiederum eine entsprechende formschlüssige Aufnahme zur Verbindung mit dem Stempel 24 befindet.

Um die hin- und hergehende Bewegung des Stößeltriebs 12 auszugleichen, ist - wie bereits erwähnt - das Ausgleichsgewicht 28 vorgesehen.

Das Ausgleichsgewicht 28 wird unmittelbar von der Exzenterwelle 26 angetrieben, die hierzu einen Ausgleichsexzenter 30 aufweist, der um 180° gegenüber dem Antriebsexzenter 32 versetzt auf der Exzenterwelle 26 angeordnet ist. Das Ausgleichsgewicht 28 weist eine ovale Führungsöffnung 34 auf, die von dem Ausgleichsexzenter 30 durchsetzt ist, so daß das Ausgleichsgewicht 28 mit seiner Führungsöffnung 34 gleitend an dem Ausgleichsexzenter 30 geführt ist. Um eine hin- und hergehende Bewegung des Ausgleichsgewichtes 28 in einer Richtung parallel zur Stößelachse 16 zu gewährleisten, sind an beiden Seiten des Ausgleichsgewichtes 28 je ein Steg 35 bzw. 36 vorgesehen, der mit einer Führungsnut 37 bzw. 38 zusammenwirkt, die am Gehäuse 14 vorgesehen ist. Die Führungsnuten 37 bzw. 38 bestehen aus Kunststoff und sind als etwa halbzylindrische Schalen ausgebildet, die in entsprechend geformte Ausnehmungen zwischen den Stegen 35, 36 und dem Gehäuse 14 einschiebbar sind, um so ein Auswechseln der Führungsnuten 37, 38 zu ermöglichen, falls dies verschleißbedingt nach langer Betriebszeit nötig werden sollte. Da das Ausgleichsgewicht 28 vorzugsweise als Gußteil aus Grauguß oder Stahlguß hergestellt ist, ergibt sich eine vorteilhafte Gleitpaarung mit den aus Kunststoff bestehenden Nuten 37, 38.

Der Hub des Ausgleichsgewichtes 28 ist aus Platzgründen etwas geringer eingestellt als der Hub des Stößeltriebes 12. Die Masse des Ausgleichsgewichtes 28 ist in entsprechender Weise vergrößert, um durch einen gleichgroßen, jedoch entgegengesetzt gerichteten Impuls einen vollständigen Impulsausgleich des Stößeltriebes 12 zu gewährleisten.

## Patentansprüche

1. Knabber mit einem Stößeltrieb, mit einem in einem Gehäuse (14) aufgenommenen, längs einer Stößelachse (16) hin- und herbewegbaren Stößel (18), durch den ein Stempel (24) antreibbar ist, der mit einer am Gehäuse (14) befestigten Matrize (22) zusammenwirkt, mit einer motorisch antreibbaren Exzenterwelle (26) zum Antrieb des Stößels (18) und mit einem Ausgleichsgewicht (28) zur Vibrationsdämpfung, wobei das Ausgleichsgewicht (28) im Gehäuse (14) in einer Richtung parallel zur Stößelachse (16) geführt ist und von der Exzenterwelle (26) entgegen der Bewegung des Stößels (18) hin- und hergehend angetrieben ist, wobei auf der Exzenterwelle (26) ein Ausgleichsexzenter (30) vorgesehen ist, der gegenüber einem Antriebsexzenter (32) zum Antrieb des Stößels (18) um 180° drehversetzt angeordnet ist, und wobei das Ausgleichsgewicht (28) eine Führungsöffnung (34) aufweist, die von dem Ausgleichsexzenter (30) zum Antrieb des Ausgleichsgewichts (28) durchsetzt ist.

2. Knabber nach Anspruch 1, dadurch gekennzeichnet, daß das Ausgleichsgewicht (28) eine ovale Führungsöffnung (34) aufweist, in die der Ausgleichsexzenter (30) gleitend eingreift.

3. Knabber nach einem der vorhergehenden Ansprüche, bei dem das Ausgleichsgewicht (28) mit seitlichen Stegen (35, 36), die in Nuten (37, 38) eingreifen, am Gehäuse (14) geführt ist.

4. Knabber nach Anspruch 3, bei dem die Stege (35, 36) in Kunststoffnuten (37, 38) am Gehäuse (14) geführt sind.

5. Knabber nach einem der vorhergehenden Ansprüche, bei dem der Hub des Ausgleichsgewichts geringer als der Hub des Stößeltriebs (12) ist, wobei die Masse des Ausgleichsgewichts (28) derart bemessen ist, daß der Impuls des Ausgleichsgewichtes (28) gleich groß, aber entgegengesetzt zu dem Impuls des Stößelantriebs (12) ist.

6. Knabber nach einem der Ansprüche 1 bis 5, bei dem der Antriebsexzenter (30) über ein Lager (40) mit einer Pleuelstange (42) drehbeweglich verbunden ist, die in einer Ausnehmung (44) des Stößels (18) an ihrem dem Stempel (24) zugewandten Ende drehbeweglich und an ihrem gegenüberliegenden Ende gleitend geführt ist.

7. Knabber nach einem der vorhergehenden Ansprüche, bei dem der Stößel (18) an seinem dem Stempel (24) zugewandten Ende ein zur Stößelachse (16) außermittig angeordnetes Koppelelement zur formschlüssigen Kopplung mit dem Stempel (24) aufweist, und daß der Stempel (24) in einem Werkzeughalter (64) beweglich geführt ist, der über eine Gewindeverbindung (66, 68) am Gehäuse (14) lösbar befestigt ist, wobei die formschlüssige Kopplung des Stößels (18) mit dem Stempel (24) durch ein seitliches Einschieben des Stempels mit einem Formschlußelement (62) in ein Formschlußgegenelement (60) herstellbar ist.

8. Knabber nach Anspruch 7, bei dem am Gehäuse (14) ein Außengewinde (66) vorgesehen ist, an dem der Werkzeughalter (64) mit einer Überwurfmutter (70) zu befestigen ist.

9. Knabber nach Anspruch 7 oder 8, bei dem ein Verlängerungselement (72), das zwischen dem Gehäuse (14) und dem Werkzeughalter (64) lösbar befestigbar ist.

10. Knabber nach einem der vorhergehenden Ansprüche, bei dem der Stößel (18) zweiteilig mit einem ersten Stößelelement (19), an dem die Pleuelstange (42) angreift, und mit einem zweiten Stößelelement (20), das mit dem Stempel (24) oder dem Verlängerungselement (72) verbindbar ist, ausgebildet ist.

## Claims

1. Nibbler having a ram drive, having a ram (18) accommodated in a housing (14) and reciprocable along a ram axis (16) and usable to drive an upper die (24), which cooperates with a bottom die (22) fastened to the housing (14), having a motor-drivable eccentric shaft (26) for driving the ram (18) and having a counterweight (28) for reducing vibration, wherein the counterweight (28) is guided in the housing (14) in a direction parallel to the ram axis (16) and is driven by the eccentric shaft (26) in a reciprocating manner counter to the motion of the ram (18), wherein provided on the eccentric shaft (26) is a compensating eccentric (30), which is disposed rotationally offset by 180° relative to a driving eccentric (32) for driving the ram (18), and wherein the counterweight (28) has a guide opening (34), which is penetrated by the compensating eccentric (30) for driving the counterweight (28).

2. Nibbler according to claim 1, characterized in that the counterweight (28) has an oval guide opening (34), into which the compensating eccentric (30) slidingly engages.

3. Nibbler according to one of the preceding claims, wherein the counterweight (28) is guided on the housing (14) by means of lateral webs (35, 36), which engage into grooves (37, 38).

4. Nibbler according to claim 3, wherein the webs (35, 36) are guided in plastic grooves (37, 38) on the housing (14).

5. Nibbler according to one of the preceding claims, wherein the stroke of the counterweight is smaller than the stroke of the ram drive (12), wherein the mass of the counterweight (28) is such that the impetus of the counterweight (28) is equal, but opposed, to the impetus of the ram drive (12).

6. Nibbler according to one of claims 1 to 5, wherein the driving eccentric (30) is rotatably connected by a bearing (40) to a connecting rod (42), which in a recess (44) of the ram (18) is guided rotatably at its end directed towards the upper die (24) and slidingly at its opposite end.

7. Nibbler according to one of the preceding claims, wherein the ram (18) at its end directed towards the upper die (24) comprises a coupling element disposed eccentrically relative to the ram axis (16) for positive engagement coupling to the upper die (24), and that the upper die (24) is movably guided in a toolholder (64) which is detachably fastened by a threaded connection (66, 68) to the housing (14), wherein the positive engagement coupling of the ram (18) to the upper die (24) may be effected through lateral insertion of the upper die by a positive engagement element (62) into a counterpart positive engagement element (60).

8. Nibbler according to claim 7, wherein on the housing (14) an external thread (66) is provided, to which the toolholder (64) is to be fastened by means of a union nut (70).

9. Nibbler according to claim 7 or 8, wherein an extension element (72), which is detachably fastenable between the housing (14) and the toolholder (64).

10. Nibbler according to one of the preceding claims, wherein the ram (18) is of a two-part construction comprising a first ram element (19), upon which the connecting rod (42) acts, and a second ram element (20) which is connectable to the upper die (24) or the extension element (72).

## Revendications

1. Grignoteuse avec actionnement à poussoir, comprenant un poussoir (18), déplaçable en va-et-vient suivant un axe de poussoir (16), monté dans un bâti (14), et par lequel peut être actionné un poinçon (24), et agit en coopération avec une matrice (22) fixée au bâti (14), comprenant un arbre à excentrique (26) pouvant être entraîné par moteur afin d'actionner le poussoir (18) et comprenant un poids de compensation (28) pour amortir les vibrations, dans laquelle le poids de compensation (28) est guidé dans le bâti (14) suivant une direction parallèle à l'axe (16) du poussoir et est actionné pour effectuer un déplacement en va-et-vient, à partir de l'arbre à excentrique (26), contre le déplacement du poussoir (18), dans laquelle sur l'arbre à excentrique (26) est prévu un excentrique de compensation (30), qui est disposé pour être déporté en rotation sur 180° par rapport à un excentrique d'actionnement (32) en vue d'actionner le poussoir (18) et, dans laquelle le poids de compensation (28) comporte une ouverture de guidage (34) qui est traversée par l'excentrique de compensation (30) en vue d'entraîner le poids de compensation (28).

2. Grignoteuse selon la revendication 1, caractérisée en ce que le poids de compensation (28) comporte une ouverture de guidage (34) ovale dans laquelle l'excentrique de compensation (30) est engagé de façon coulissante.

3. Grignoteuse selon l'une quelconque des revendications précédentes, dans laquelle le poids de compensation (28) est guidé dans le bâti (14) par des nervures latérales (35,36) qui s'engagent dans des rainures (37,38).

4. Grignoteuse selon la revendication 3, dans laquelle les nervures (35,36) sont guidées dans des rainures en matière plastique (37,38) à l'intérieur du bâti (14).

5. Grignoteuse selon l'une quelconque des revendications précédentes, dans laquelle la course du poids de compensation est plus petite que la course de l'actionnement de poussoir (12), dans laquelle la masse du poids de compensation (28) est déterminée de telle manière que la quantité de mouvement du poids de compensation (28) soit de grandeur égale, mais inverse, à la quantité de mouvement de l'actionnement de poussoir (12).

6. Grignoteuse selon l'une des revendications 1 à 5, dans laquelle l'excentrique d'actionnement (30) est couplé, pour effectuer un mouvement de rotation, à une bielle (42) au niveau d'un palier (40), laquelle est guidée dans un évidement (44) du poussoir (18) par rotation au niveau de son extrémité tournée vers le poinçon (24) et par coulissement au niveau de son extrémité opposée.

7. Grignoteuse selon l'une quelconque des revendications précédentes, dans laquelle le poussoir (18) comprend, au niveau de son extrémité tournée vers le poinçon (24), un élément de couplage disposé de manière excentrée par rapport à l'axe de poussoir (16) pour le couplage par complémentarité de formes avec le poinçon (24) et dans laquelle le poinçon (24) est guidé en déplacement dans un porte-outil (64), lequel est fixé de manière détachable au bâti (14) par un assemblage par filetage (66,68), le couplage par complémentarité de formes du poussoir (18) avec le poinçon (24) pouvant être réalisé par une introduction latérale du poinçon, par l'intermédiaire d'un élément ayant une forme (62), dans un élément mécanique (60) de forme complémentaire.

8. Grignoteuse selon la revendication 7, dans laquelle sur le bâti (14) est prévu un filetage externe (66), sur lequel le porte-outil (64) doit être fixé au moyen d'un écrou d'accouplement (70).

9. Grignoteuse selon l'une des revendications 7 ou 8, dans laquelle un élément de prolongement (72) peut être fixé de manière détachable entre le bâti (14) et le porte-outil (64).

10. Grignoteuse selon l'une quelconque des revendications précédentes, dans laquelle le poussoir (18) est formé en deux parties comprenant un premier élément de poussoir (19) dans lequel vient en prise la bielle (42) et un deuxième élément de poussoir (20) qui peut être couplé au poinçon (24) ou à l'élément de prolongement (72).
